# EUROPEAN PATENT SPECIFICATION

(11) **EP 2 891 299 B1**
(45) Date of publication and mention of the grant of the patent: **15.08.2018**
(21) Application number: 13759067.5
(22) Date of filing: 22.08.2013
(51) Int. Cl.: H04L 29/08

(54) **SYSTEMS AND METHODS FOR EFFICIENT REMOTE SECURITY PANEL CONFIGURATION AND MANAGEMENT**
SYSTEME UND VERFAHREN ZUR EFFIZIENTEN FERNKONFIGURATION UND VERWALTUNG EINER SICHERHEITSTAFEL
SYSTÈMES ET PROCÉDÉS PERMETTANT UNE CONFIGURATION ET UNE GESTION À DISTANCE EFFICACES DE PANNEAUX DE SÉCURITÉ

(30) Priority: 28.08.2012 US 201261694030 P
(43) Date of publication of application: 08.07.2015
(73) Proprietor: UTC Fire & Security Americas Corporation, Inc., Bradenton, FL 34202 (US)
(72) Inventor: MANGAIAHGARI, Phani Pavan Kumar, Hitech City Hyderabad AP 500 081 (IN); N, Ananthakrishnan, Hitech City Hyderabad AP 500 081 (IN); KURIAKOSE, Boby, Hitech City Hyderabad AP 500 081 (IN)
(74) Representative: Schmitt-Nilson Schraud Waibel Wohlfrom Patentanwälte Partnerschaft mbB
(86) International application number: PCT/US2013/056131
(87) International publication number: WO 2014/035783

(56) References cited:
- EP-A1- 2 437 551
- WO-A1-01/22701
- WO-A1-03/090491
- DE-U1- 20 115 873
- US-A1- 2005 085 245
- US-A1- 2008 162 364

## Description

### Field

The systems and methods pertain to remote security panel configuration and management.

### Description of the Prior Art

Global computer networks, such as the Internet, can allow security system users to remotely access on-site security panels that control the security system. Various programs or applications can communicate with an on-site security panel and allow a user to operate the security panel remotely similar to how the use would operate the security panel on-site. For example, the user can remotely activate or deactivate alarms, motions sensors, and safety systems; control and view live feeds from surveillance cameras; lock or unlock doors and windows; etc. However, not all functions of the security panel can be operated remotely. For example, a non-activated security panel may not have the connection parameters required to receive remote commands, such as the Internet Protocol (hereinafter, "IP) address of an intermediary management server. Accordingly, the security panel may require an on-site installer to activate the security panel and enable remote operation before the security panel can be used or accessed remotely.

Further, once a security panel is configured to allow for remote operation, existing solutions can require the security panel to periodically ping a security panel management server to determine whether a remote command has been submitted. Accordingly, such solutions can result in excessive network traffic to frequently ping a server, or a remote command may be delayed if the server is pinged infrequently as the security panel can only discover that a command has been submitted after pinging the server.
EP 2 437 551 A1 discloses a method for steering a handset's user on preferred networks. While roaming, the user is able to move from a home network to a visited network whereby, on detecting a roaming event, the handset automatically switches from 2G/3G visited networks to Wi-Fi preferred networks when available. The Wi-Fi network sends an SMS text comprising an internet address URL for accessing the Wi-Fi roaming system when clicking on the link thus provided.

WO 03/090491 A1 relates to a method for controlling a mobile communication terminal by means of at least one external control unit, according to which the at least one control unit generates a control message and transmits the control message to the mobile communication terminal via an air interface by means of a protocol. The control message is decoded in the mobile communication terminal by means of a decoding unit and is converted into calls by a call interface which is implemented within the mobile communication terminal, whereby one or several functions is/are triggered in the mobile communication terminal.

US 2008/162364 A1 discloses a system and method for controlling a local security system from a remote location using e-mail. The system receives an e-mail message from a remote e-mail terminal that contains at least one control instruction for controlling the local security system authenticate the e-mail message based upon at least one authentication criterion and authorizes a sender of the e-mail message based at least upon an e-mail address. If the sender is authorized and the message is authentic, the control instruction is transmitted to the local security system for execution. The control e-mail message can be encrypted using an encryption key for added security.

US 2005/085245 A1 discloses an apparatus and methods to enable a wireless wide area network (WWAN) module to filter WWAN signals and to determine whether to awaken a processor from a low power mode. When it is determined that the processor is not to be awakened, the WWAN signals may be stored for subsequent processing, and the processor may maintain the low power mode.

Therefore, there is a need for a security panel management system that can remotely activate and configure security panels and minimize communication traffic and delays caused by intervals between pings.

### Summary

According to the present invention, a security apparatus having the features according to claim 1 and a system for managing security systems having the features according to claim 8 are provided. Preferred embodiments of the invention are defined in the respective dependent claims.

According to the present invention, a security panel management system is disclosed. In certain embodiments, the system comprises a server configured to manage security panels which are configured to receive commands, activation instructions, and configuration instructions, in particular, commands to perform operations including activating motion detectors, configuring alarm systems, turning on lights, and locking doors, and to operate a security system based on the commands and instructions. The server is further configured to send a Short Message Service (hereinafter, "SMS") message comprising connection parameters to a security panel, and communicate with the security panel via a network connection established using the connection parameters.

In further embodiments, the system comprises a security panel configured to receive an SMS message comprising connection parameters, parse the SMS message to identify the connection parameters, and establish a network connection with a communication server using the connection parameters.

### Brief Description of the Drawings

The accompanying figures, where like reference numerals refer to identical or functionally similar elements throughout the separate views, together with the detailed description below, are incorporated in and form part of the specification, and serve to further illustrate embodiments of concepts that include the claimed embodiments, and explain various principles and advantages of those embodiments.
FIG. 1 is a diagram depicting an exemplary security panel management environment, consistent with certain disclosed environments.
FIG. 2 is a diagram depicting an exemplary security panel, consistent with certain disclosed environments.
FIG. 3 is a flow diagram depicting an exemplary sequence of security panel management communications, consistent with certain disclosed environments.

### Description of the Embodiments

With reference now to the various drawing figures in which identical elements are numbered identically throughout, a description of the embodiments will now be provided.

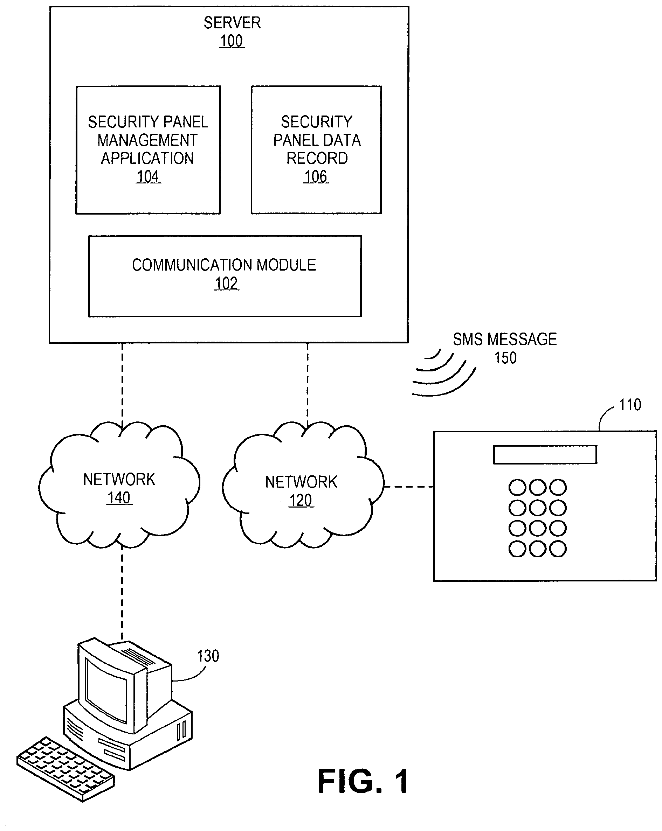

FIG. 1 is a diagram depicting an exemplary security panel management environment, consistent with certain disclosed environments. The environment comprises server 100 connected to security panel 110 via network 120. Network 120 can be, for example, a global or wide area network, such as the Internet. In some cases, network 120 can be a local area network. Server 100 can have communication module 102 implemented thereon. Server 100 can connect to network 120 via communication module 102.

In embodiments, security panel 110 can be configured to receive commands, activation instructions, and configuration instructions and operate a security system based on such commands or instructions. For example, security panel 110 can be configured to receive commands to perform operations including activating motion detectors, configuring alarm systems, turning on lights, and locking doors. It should be appreciated that while FIG. 1 depicts a single security panel 110, security panel 110 can represent a plurality of security panels that are individually managed by the system.

Server 100 can have security panel management application 104 implemented thereon. In particular, security panel management application 104 can be a local or online service platform that allows users to remotely manage one or more security panels. As used herein, a "user" or "users" refers to any administrator of a third party company, any individual, or any other entity that remotely operates security panel 110.

In some implementations, security panel management application 104 can allow a user local to server 100, such as a system administrator, to communicate instructions or commands to security panel 110. In further embodiments, a user can remotely communicate with server 100 from computing device 130 via network 140. Although network 120 and network 140 are depicted in FIG. 1 as representing two separate networks, in some embodiments, network 120 and network 140 can represent the same communication network. Additionally, computing device 130 can represent any type of computing device capable of communicating with server 100 via network 140, such as a desktop computer, laptop, cellular phone, or tablet computer.

Server 100 can additionally have security panel data record 106 implemented thereon. In particular, security panel data record 106 can be utilized to store data related to security panel 110. For example, security panel data record 106 can be utilized to store one or more of the Mobile Station International Subscriber Directory Number (MSISDN), serial number, Media Access Control (MAC) address, subscriber identity module (SIM) details, SIM Integrated Circuit Card Identifier (ICCID), International Mobile Equipment Identity (IMEI) number, modem details, IP address, and preferred port number of security panel 110. Additionally, security panel data record 106 can be utilized to store information related to individual security equipment of the security system, such as serial numbers of motion sensors, video cameras, etc.

In embodiments, server 100 can receive the above security panel data record 106 information from the manufacturer of security panel 110. For example, such information can be received from the manufacturer via a network connection. Or, as an additional example, a user local to server 100 can manually enter the security panel data record 106 information into server 100.

Computing device 130 can implement and/or support a security panel remote access application. For example, the security panel remote access application can be a mobile phone application, a web application, or any other type of program that allows a user to select commands or instructions to send to security panel 110. The security panel remote access application can send any commands selected by the user to server 100 via network 140.

In embodiments, after server 100 receives commands or instructions from a user, either via network 140 or via direct input from a user local to server 100, server 100, using communication module 102, can send SMS message 150 to security panel 110 before communicating the commands or instructions to security panel 110 via network 120. Server 100 can send SMS message 150 to security panel 110 using a unique MSISDN associated with security panel 110. Additionally, server 100 can send SMS message 150 using any network capable of utilizing SMS technology, for example, a cellular network or a broadband network. Further, SMS message 150 can include one or more characters of text and can utilize any standard set or communication protocol compatible with SMS technology, such as Global System for Mobile Communications (GSM®), General Packet Radio Service (GPRS), 3rd generation mobile telecommunications standards (3G), 4th generation mobile telecommunications standards (4G), Simple Mail Transfer Protocol (SMTP), Transmission Control Protocol (TCP), and IP.

In embodiments, server 100 can dial and give a predefined number of ringtones to the modem of security panel 110 via, for example, GSM® or plain old telephone service (POTS). The predefined number of ringtones can serve as an indication to security panel 110 that server 100 is attempting to or will attempt to establish a connection with security panel 110. Accordingly, security panel 110 is not required to frequently ping or be permanently connected to server 100 to receive commands.

In operation, for example, SMS message 150 can include a "Wake Up" command instructing security panel 110 to establish a network connection, via network 120, with server 100. In some embodiments, a "Wake Up" command may not be necessary, and the receipt of SMS message 150 can communicate to security panel 110 the instruction to establish a network connection with server 100. Additionally, SMS message 150 can include an indication of the type of communication forthcoming. For example, SMS message 150 can indicate that server 100 will transmit a command as part of the communication. Further, SMS message 150 can include one or more connection parameters. Connection parameters can include, but are not limited to, the IP address of server 100, the Domain Name System (DNS) name of server 100, and the port number of server 100 for the communication session. SMS message 150 can also include one or more parsing characters, such as a space, a comma, or infrequently used characters, to allow security panel 110 to efficiently parse SMS message 150. Examples of SMS message 150 can include:
<WAKEUP> <ACTIVATION> <SERVER:192.168.150.152> <PORT:80>;
DOWNLOAD, SERVER:192.222.154.125, PORT:443; and
USERCOMMAND 192.168.150.152 80.

Additionally, SMS message 150 can include passcode or other security information that can allow security panel 110 to identify that SMS message 150 originated from an authorized source. In further embodiments, security panel 110 can maintain a list of authorized server IP addresses and match any received IP address with a listed authorized server IP address before executing any instructions. In still further embodiments, SMS message 150 can be encoded before transmission by server 100 and can be decoded after transmission by security panel 110 to prevent unauthorized access.

After security panel 110 receives SMS message 150 from server 100, security panel can parse the SMS message to identify, for example, the type of communication forthcoming, the IP address of server 100, and the port number of server 100 for the communication session. Subsequently, security panel 110 can establish a network connection, via network 120, with server 100 using the identified IP address of server 100 and the identified port number of server 100. After the connection is established, server 100 can transmit data to security panel 110, including, for example, any commands selected by a user from computing device 130, firmware updates for the security panel, configuration instructions, and activation instructions. Security panel 110 can thereafter perform the user selected commands, install the firmware updates, and/or execute the configuration or activation instructions.

In embodiments, communications between security panel 110 and server 100 can utilize cryptographic protocols to prevent unauthorized access to security panel 110. Such cryptographic protocols can include Secure Sockets Layer (SSL), Point-to-Point Protocol (PPP), etc. For example, security panel 110 can utilize SSL to communicate with server 100 and can utilize an SSL certificate to validate or authorize the identity of server 100.

Additionally, in some embodiments, not every SMS message received by security panel 110 will initiate a connection to server 100. For example, server 100 can send SMS message 150 to security panel 110, and SMS message 150 can contain complete configuration instructions that do not require further instructions via a connection with server 100. Therefore, SMS message 150 may not contain connection parameters, and security panel 110 can perform the configuration instructions without connecting to server 100.

In some cases, security panel 110 can submit results from the performed command or executed instructions to server 100. For example, security panel 110 can receive a command to activate an alarm system, successfully perform the command, and then submit a result to server 100 that includes an indication that the alarm system was activated successfully. As a further example, security panel 110 can receive a command to stream a live feed from a surveillance camera and then submit a result to server 100 that includes a streaming live feed from the surveillance camera. In certain embodiments, server 100 can relay the results received from security panel 110 to computing device 130.

In some embodiments, after data has been transmitted to security panel 110 using the network connection, server 100 and/or security panel 110 can terminate the network connection. Once the network connection is terminated, security panel 110 can begin or return to an SMS listening state. During the SMS listening state, security panel 110 can wait for the next SMS message from a server and is not required to ping the server to identify if a command or instruction has been submitted.

It should be appreciated that the environment depicted in FIG. 1 is merely exemplary and can comprise various combinations and types of components. For example, although server 100 is pictured as a single device, server 100 can include a plurality of devices that are connected locally and/or are connected via a network connection. Further, although computing device 130 is depicted as only communicating with server 100, in certain embodiments, computing device 130 can be configured to directly communicate with security panel 110. For example, computing device 130 can be configured to send an SMS message directly to security panel 110 based on instructions selected by a user. Additionally, in some embodiments, security panel 110 can establish a connection directly with computing device 130.

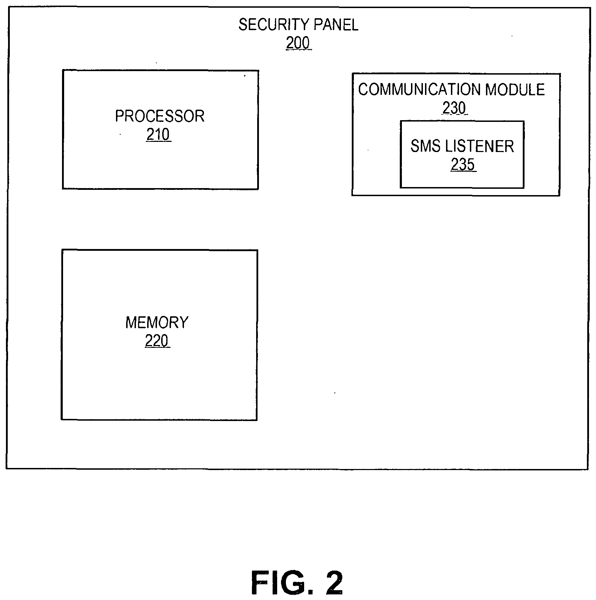

Referring to FIG. 2, depicted is an exemplary security panel 200 and components thereof. It should be appreciated that FIG. 2 represents a generalized schematic illustration and that other components and/or entities can be added or existing components and/or entities can be removed or modified.

As shown in FIG. 2, security panel 200 can comprise processor 210 communicating with memory 220, such as electronic random access memory, or other forms of transitory or non-transitory computer readable storage mediums. Processor 210 can further communicate with communication module 230, such as a wired or wireless data connection, which in turn communicates with a wide area network, such as various public or private networks. More particularly, the wide area network can connect security panel 200 to one or more security panel management servers, such as server 100 as discussed with respect to FIG. 1, and/or other components. Communication module 230 can include SMS listener 235, which can listen for and receive SMS messages.

Processor 210 can execute control logic and perform data processing to perform the functions and techniques as discussed herein. For example, processor 210 can execute commands received from a security panel management server, such as sending signals to activate motion sensors, activate alarms, lock doors, etc.

As used herein, "security panel" can refer to any type of apparatus or system capable of managing or controlling one or more elements of a security system. Additionally, while FIG. 2 illustrates security panel 200 as a standalone system using a combination of hardware and software, the components of security panel 200 can also be implemented as a software application or program capable of being executed by a conventional computer platform. Likewise, the components of security panel 200 can also be implemented as a software module or program module capable of being incorporated in other software applications and programs. In either case, the components of security panel 200 can be implemented in any type of conventional proprietary or open-source computer language.

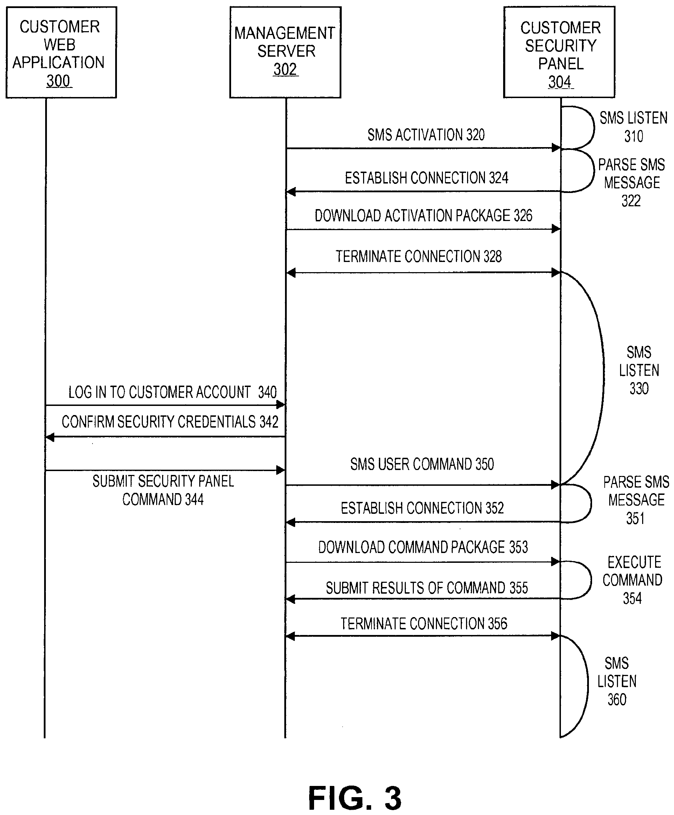

Referring to FIG. 3, depicted is a flowchart detailing embodiments as described herein. More particularly, the flowchart details communications and interactions among customer web application 300, management server 302, and customer security panel 304. It should be appreciated that the flowchart of FIG. 3 is merely exemplary and can comprise more or fewer functionalities.

The flowchart begins with customer security panel 304 listening for an SMS message (310). Management server 302 can send an SMS activation message (320) to customer security panel 304. The SMS activation message can include one or more communication parameters, as described above. Customer security panel 304 can parse the SMS message (322) and identify the forthcoming communication type and communication parameters, and then establish a connection (324) with management server 302 using the communication parameters. Management server 302 can transmit and customer security panel 304 can download an activation package (326) using the established connection. After the activation package has been transferred, management server 302 and/or customer security panel 304 can terminate the established connection (328). The activation package can include activation instructions, configuration instructions, and/or firmware updates for customer security panel 304, and customer security panel 304 can execute the instructions and/or the updates before, after, or while terminating the connection with management server 302. After the connection is terminated, customer security panel 304 can return to listening for a new SMS message (330).

At a subsequent time, the customer can attempt to log in to a customer account (340) associated with management server 302 and customer security panel 304. Management server 302 can verify the security credentials of the user (342) and grant the user access to the account. Once the user has access to the account, the user can submit a security panel command (344) to management server 302. For example, the customer can submit a command instructing the customer security panel to activate the alarm system.

Management server 302 can send an SMS user command message (350) to customer security panel 304. The SMS command message can include one or more communication parameters, as described above. Customer security panel 304 can parse the SMS message (351) and establish a connection (352) with management server 302, as described above. Management server 302 can transmit and customer security panel 304 can download a user command package (353) using the established connection. After the command package has been transferred, customer security panel 304 can execute the command (354) and store the results of the command. For example, customer security panel 304 can instruct the alarm system to activate and store a result that the alarm system activated correctly. Customer security panel 304 can then submit the results of the command (355) to management server 302. Then management server 302 and/or customer security panel 304 can terminate the established connection (356). After the connection is terminated, customer security panel 304 can return to listening for a new SMS message (360).

It has been shown how the present embodiments have been attained. Modification and equivalents of the disclosed concepts are intended to be included, the invention being defined by the scope of the claims which are appended hereto.

## Claims

1. A security apparatus comprising:
a security panel (110) configured to
- receive commands, activation instructions, and configuration instructions relating to commands to perform operations including activating motion detectors, configuring alarm systems, turning on lights, and locking doors, and
- operate a security system based on the commands and instructions, a modem;
a processing system comprising one or more processors (210); and a memory system (220) comprising one or more computer-readable media, wherein the computer-readable media contain instructions that, when executed by the processing system, cause the processing system to perform operations comprising:
receiving an SMS message (150) comprising one or more characters, wherein the one or more characters comprise one or more parameters; parsing the one or more characters to identify the one or more parameters; and establishing a network connection with a communication server (100) using the one or more parameters,
wherein the modem is configured to receive a predefined number of ringtones sent by a communication server (100), predefined number of ringtones serving as an indication to the security panel (110) that the server (100) is attempting to or will attempt to establish a connection with the security panel (110). wherein the operations further comprise receiving one or more commands from the communication server (100) via the network connection.

2. The security apparatus of claim 1, the operations further comprise downloading a firmware update from the communication server (100) via the network connection.

3. The security apparatus of claim 1, the operations further comprise receiving configuration instructions from the communication server (100) via the network connection.

4. The security apparatus of claim 1, wherein the one or more commands are sent by the communication server (100) in response to a request, via a web application (300), from a user (342).

5. The security apparatus of claim 1, the operations further comprise executing the one or more commands.

6. The security apparatus of claim 5, the operations further comprise:
determining one or more results based on the executing the one or more commands; and
sending the one or more results to the communication server (100) via the network connection.

7. The security apparatus of claim 1, the operations further comprise receiving activation instructions from the communication server (100) via the network connection.

8. A system for managing security systems comprising:
a server (100);
at least one security apparatus;
the at least one security apparatus comprising:
a security panel (110) being configured to
- receive commands, activation instructions, and configuration instructions relating to commands to perform operations including activating motion detectors, configuring alarm systems, turning on lights, and locking doors, and
operate a security system based on the commands and instructions; a modem;
a processing system comprising one or more processors (210); and
a memory system (220) comprising one or more computer-readable media; and
wherein the server (100) is configured to communicate with security panels (110) and to perform operations comprising:
sending an SMS message (150) comprising one or more characters to a security panel (110), wherein the one or more characters comprise one or more parameters; and
communicating with the security panel (110) via a network connection established using the one or more parameters; and
dialing and giving a predefined number of ringtones to a modem of a security panel (110), the predefined number of ringtones serving as an indication to the security panel (110) that the server (100) is attempting to or will attempt to establish a connection with the security panel (110); wherein the operations further comprise sending one or more commands to the security panel (110) via the network connection.

9. The system of claim 8, the operations further comprise transferring a firmware update to the security panel (110) via the network connection.

10. The system of claim 8, the operations further comprise sending configuration instructions to the security panel (110) via the network connection.

11. The system of claim 8, the operations further comprise:
receiving, from a web application (300), one or more instructions from a user (342); and
wherein the one or more commands are based on the one or more instructions from the user (342).

12. The system of claim 11, the operations further comprise receiving one or more results from the security panel (10) via the network connection, wherein the one or more results are determined based on an execution of the one or more commands by the security panel (110).

13. The system of claim 8, the operations further comprise transferring activation instructions to the security panel (110) via the network connection.

## Patentansprüche

1. Sicherheitsvorrichtung, umfassend:
eine Sicherheitsbedienplatte (110), die konfiguriert ist
- zum Empfangen von Befehlen, Aktivierungsanweisungen und Konfigurationsanweisungen, die Befehle zum Durchführen von Operationen betreffen, einschließlich Aktivieren von Bewegungsdetektoren, Konfigurieren von Alarmsystemen, Einschalten von Lichtern und Versperren von Türen, und
- zum Betreiben eines Sicherheitssystems, das auf den Befehlen und Anweisungen basiert,
ein Modem;
ein Verarbeitungssystem, das ein oder mehrere Prozessoren (210) umfasst; und
ein Speichersystem (220), das ein oder mehrere computerlesbare Medien umfasst, wobei die computerlesbaren Medien Anweisungen enthalten, die bei Ausführung durch das Verarbeitungssystem das Verarbeitungssystem dazu veranlassen, Operationen durchzuführen, die umfassen:
Empfangen einer SMS-Nachricht (150), die ein oder mehrere Zeichen umfasst,
wobei die ein oder mehreren Zeichen einen oder mehrere Parameter umfassen;
Parsen des einen oder der mehreren Zeichen zur Identifizierung des einen oder der mehreren Parameter; und
Aufbauen einer Netzwerkverbindung mit einem Kommunikationsserver (100) unter Verwendung des einen oder der mehreren Parameter,
wobei das Modem konfiguriert ist, um eine vordefinierte Anzahl von Klingeltönen zu empfangen, die von einem Kommunikationsserver (100) gesendet wurden,
wobei die vordefinierte Anzahl an Klingeltönen als Angabe an die Sicherheitsbedienplatte (110) dient, dass der Server (100) versucht oder versuchen wird, eine Verbindung mit der Sicherheitsbedienplatte (110) aufzubauen,
wobei die Operationen ferner das Empfangen von einem oder mehreren Befehlen von dem Kommunikationsserver (100) über die Netzwerkverbindung umfassen.

2. Sicherheitsvorrichtung nach Anspruch 1, wobei die Operationen ferner das Herunterladen eines Firmware-Updates von dem Kommunikationsservers (100) über die Netzwerkverbindung umfassen.

3. Sicherheitsvorrichtung nach Anspruch 1, wobei die Operationen ferner das Empfangen von Konfigurationsanweisungen von dem Kommunikationsserver (100) über die Netzwerkverbindung umfassen.

4. Sicherheitsvorrichtung nach Anspruch 1, wobei der eine oder die mehreren Befehle durch den Kommunikationsserver (100) in Reaktion auf eine Anfrage eines Benutzers (342) über eine Web-Anwendung (300) gesendet werden.

5. Sicherheitsvorrichtung nach Anspruch 1, wobei die Operationen ferner das Ausführen des einen oder der mehreren Befehle umfassen.

6. Sicherheitsvorrichtung nach Anspruch 5, wobei die Operationen ferner umfassen:
Ermitteln von einem oder mehreren Ergebnissen basierend auf dem Ausführen des einen oder der mehreren Befehle; und
Senden des einen oder der mehreren Ergebnisse an den Kommunikationsserver (100) über die Netzwerkverbindung.

7. Sicherheitsvorrichtung nach Anspruch 1, wobei die Operationen ferner das Empfangen von Anweisungen von dem Kommunikationsserver (100) über die Netzwerkverbindung umfassen.

8. System zum Verwalten von Sicherheitssystemen, umfassend:
einen Server (100);
mindestens eine Sicherheitsvorrichtung;
wobei die mindestens eine Sicherheitsvorrichtung umfasst:
eine Sicherheitsbedienplatte (110), die konfiguriert ist zum
- Empfangen von Befehlen, Aktivierungsanweisungen und Konfigurationsanweisungen, die Befehle zum Durchführen von Operationen betreffen, einschließlich Aktivieren von Bewegungsdetektoren, Konfigurieren von Alarmsystemen, Einschalten von Lichtern und Versperren von Türen, und
Betreiben eines Sicherheitssystems, das auf den Befehlen und Anweisungen basiert;
ein Modem;
ein Verarbeitungssystem, das einen oder mehrere Prozessoren (210) umfasst; und
ein Speichersystem (220), das ein oder mehrere computerlesbare Medien umfasst; und
wobei der Server (100) konfiguriert ist, um mit Sicherheitsbedienplatten (110) zu kommunizieren und Operationen durchzuführen, die umfassen:
Senden einer SMS-Nachricht (150), die ein oder mehrere Zeichen umfasst, an eine Sicherheitsbedienplatte (110), wobei das eine oder die mehreren Zeichen einen oder mehrere Parameter umfasst bzw. umfassen; und
Kommunizieren mit der Sicherheitsbedienplatte (110) über eine Netzwerkverbindung, die unter Verwendung des einen oder der mehreren Parameter aufgebaut worden ist; und
Wählen und Geben einer vordefinierten Anzahl an Klingeltönen an ein Modem einer Sicherheitsbedienplatte (110), wobei die vordefinierte Anzahl der Klingeltöne als Angabe für die Sicherheitsbedienplatte (110) dient, dass der Server (100) versucht oder versuchen wird, eine Verbindung mit der Sicherheitsbedienplatte (110) aufzubauen,
wobei die Operationen ferner das Senden von einem oder mehreren Befehlen an die Sicherheitsbedienplatte (110) über die Netzwerkverbindung umfassen.

9. System nach Anspruch 8, wobei die Operationen ferner das Transferieren eines Firmware-Updates über die Netzwerkverbindung an die Sicherheitsbedienplatte (110) umfassen.

10. System nach Anspruch 8, wobei die Operationen ferner das Senden von Konfigurationsanweisungen über die Netzwerkverbindung an die Sicherheitsbedienplatte (110) umfassen.

11. System nach Anspruch 8, wobei die Operationen ferner umfassen:
Empfangen von einer oder mehreren Anweisungen von einem Benutzer (342) aus einer Web-Anwendung (300); und
wobei der eine oder die mehreren Befehle auf der einen oder den mehreren Anweisungen von dem Benutzer (342) basieren.

12. System nach Anspruch 11, wobei die Operationen ferner das Empfangen von einem oder mehreren Ergebnissen von der Sicherheitsbedienplatte (10) über die Netzwerkverbindung umfassen, wobei das eine oder die mehreren Ergebnisse basierend auf einer Ausführung des einen oder der mehreren Befehle durch die Sicherheitsbedienplatte (110) ermittelt werden.

13. System nach Anspruch 8, wobei die Operationen ferner das Transferieren von Aktivierungsanweisungen über die Netzwerkverbindung an die Sicherheitsbedienplatte (110) umfassen.

## Revendications

1. Appareil de sécurité comprenant :
un panneau de sécurité (110) configuré pour
- recevoir des commandes, des instructions d'activation, et des instructions de configuration relatives aux commandes pour effectuer des opérations comprenant l'activation de détecteurs de mouvement, la configuration de systèmes d'alarme, la mise en marche de lumières, et le verrouillage de portes, et
- faire fonctionner un système de sécurité en fonction des commandes et des instructions,
un modem ;
un système de traitement comprenant un ou plusieurs processeurs (210) ; et
un système de mémoire (220) comprenant un ou plusieurs supports lisibles par ordinateur, dans lequel les supports lisibles par ordinateur contiennent des instructions qui, lorsqu'elles sont exécutées par le système de traitement, amènent le système de traitement à effectuer des opérations comprenant :
la réception d'un message SMS (150) comprenant un ou plusieurs caractères, dans lequel le ou les caractères comprennent un ou plusieurs paramètres ;
l'analyse du ou des caractères pour identifier le ou les paramètres ; et
l'établissement d'une connexion de réseau avec un serveur de communication (100) à l'aide du ou des paramètres,
dans lequel le modem est configuré pour recevoir un certain nombre prédéfini de tonalités envoyées par un serveur de communication (100),
le nombre prédéfini de tonalités servant d'indication au panneau de sécurité (110) que le serveur (100) tente ou va tenter d'établir une connexion avec le panneau de sécurité (110),
dans lequel les opérations comprennent en outre la réception de plus de commandes en provenance du serveur de communication (100) via la connexion réseau.

2. Appareil de sécurité selon la revendication 1, dans lequel les opérations comprennent en outre le téléchargement d'une mise à jour de logiciel en provenance du serveur de communication (100) via la connexion réseau.

3. Appareil de sécurité selon la revendication 1, dans lequel les opérations comprennent en outre la réception d'instructions de configuration en provenance du serveur de communication (100) via la connexion réseau.

4. Appareil de sécurité selon la revendication 1, dans lequel la ou les commandes sont envoyées par le serveur de communication (100) en réponse à une requête, via une application Web (300), en provenance d'un utilisateur (342).

5. Appareil de sécurité selon la revendication 1, dans lequel les opérations comprennent en outre l'exécution de la commande ou des commandes.

6. Appareil de sécurité selon la revendication 5, dans lequel les opérations comprennent en outre :
la détermination d'un ou plusieurs résultats en fonction de l'exécution de la commande ou des commandes ; et
l'envoi du ou des résultats au serveur de communication (100) via la connexion réseau.

7. Appareil de sécurité selon la revendication 1, dans lequel les opérations comprennent en outre la réception d'instructions en provenance du serveur de communication (100) via la connexion réseau.

8. Système de gestion de systèmes de sécurité comprenant :
un serveur (100) ;
au moins un appareil de sécurité ;
l'au moins un appareil de sécurité comprenant :
un panneau de sécurité (110) configuré pour
recevoir des commandes, des instructions d'activation, et des instructions de configuration relatives aux commandes pour effectuer des opérations comprenant l'activation de détecteurs de mouvement, la configuration de systèmes d'alarme, la mise en marche de lumières, et le verrouillage de portes,
et
faire fonctionner un système de sécurité en fonction des commandes et des instructions ;
un modem ;
un système de traitement comprenant un ou plusieurs processeurs (210) ; et
un système de mémoire (220) comprenant un ou plusieurs supports lisibles par ordinateur ; et
dans lequel le serveur (100) est configuré pour communiquer avec les panneaux de sécurité (110) et pour effectuer des opérations comprenant :
l'envoi à un panneau de sécurité (110) d'un message SMS (150) comprenant un ou plusieurs caractères, dans lequel le ou les caractères comprennent un ou plusieurs paramètres ; et
la communication avec le panneau de sécurité (110) via une connexion réseau établie en utilisant le ou les paramètres ; et
la composition d'un numéro et la fourniture d'un nombre prédéfini de tonalités à un modem d'un panneau de sécurité (110), le nombre prédéfini de tonalités servant d'indication au panneau de sécurité (110) que le serveur (100) tente ou va tenter d'établir une connexion avec le panneau de sécurité (110) ;
dans lequel les opérations comprennent en outre l'envoi d'une ou plusieurs commandes au panneau de sécurité (110) via la connexion réseau.

9. Système selon la revendication 8, dans lequel les opérations comprennent en outre le transfert d'une mise à jour de logiciel au panneau de sécurité (110) via la connexion réseau.

10. Système selon la revendication 8, dans lequel les opérations comprennent en outre l'envoi d'instructions de configuration au panneau de sécurité (110) via la connexion réseau.

11. Système selon la revendication 8, dans lequel les opérations comprennent en outre :
la réception, en provenance d'une application Web (300), d'une ou plusieurs instructions d'un utilisateur (342) ; et
dans lequel la ou les commandes sont basées sur la ou les instructions de l'utilisateur (342).

12. Système selon la revendication 11, dans lequel les opérations comprennent en outre la réception d'un ou plusieurs résultats en provenance du panneau de sécurité (10) via la connexion réseau, dans lequel le ou les résultats sont déterminés sur la base d'une exécution de la commande ou des commandes par le panneau de sécurité (110).

13. Système selon la revendication 8, dans lequel les opérations comprennent en outre le transfert d'instructions d'activation au panneau de sécurité (110) via la connexion réseau.
